# EUROPEAN PATENT SPECIFICATION

(11) **EP 0 699 144 B1**
(45) Date of publication and mention of the grant of the patent: **11.08.1999**
(21) Application number: 93915043.9
(22) Date of filing: 28.05.1993
(51) Int. Cl.: B60T 1/087, B60T 5/00, B60T 10/02, F16D 57/00

(54) **PROCESS AND CONTROL SYSTEM FOR LIMITING THE BRAKING EFFECT WHICH MAY BE UTILISED FROM A HYDRODYNAMIC AUXILIARY BRAKE IN A MOTOR VEHICLE**
VERFAHREN UND STEUERUNGSSYSTEM ZUR BEGRENZUNG DES BREMSEFFECTES, WELCHER BEI EINER HYDRODYNAMISCHEN HILFSBREMSE EINES KRAFTFAHRZEUGES BENUTZT WERDEN KANN
PROCEDE ET SYSTEME DE REGULATION SERVANT A LIMITER L'EFFET DE FREINAGE PRODUIT PAR UN FREIN AUXILIAIRE HYDRODYNAMIQUE DANS UN VEHICULE A MOTEUR

(43) Date of publication of application: 06.03.1996
(73) Proprietor: SCANIA CV AKTIEBOLAG, S-151 87 Södertälje (SE)
(72) Inventor: HEDSTRÖM, Lars-Gunnar, S-610 70 Vagnhärad (SE)
(74) Representative: Waldebäck, Hans Olov
(86) International application number: SE9300478
(87) International publication number: WO9427845

(56) References cited:
- EP-A- 0 507 745
- DE-A- 2 923 406
- GB-A- 2 081 829
- GB-A- 2 134 245
- ATZ Automobiltechnische Zeitschrift, Volume 95, No. 5, May 1993, M. SCHWAB, W. HAERDTLE, K.F. HEINZELMANN, "Ein integrierter hydrodynamischer Retarder fuer die neue Ecosplit-Getriebereihe", page 254, column 3 - page 255, column 1, see from "Temperaturbegrenzung".

## Description

The present invention refers both to a process of the kind indicated in the preamble to claim 1, and to a control system of the kind indicated in the preamble to claim 5.

It is concerned with limiting the maximum braking effect which may be utilised from a hydrodynamic auxiliary brake, a so-called retarder in an engine-driven vehicle, preferably a truck or a bus.

### State of the art

It is known for motor vehicles, especially heavy duty trucks, to be provided with a so-called hydrodynamic retarder, which is a hydrodynamic brake which can be used as a brake to help the vehicle's ordinary brakes to reduce the vehicle's speed. The retarder therefore provides the possibility, to a greater or lesser extent, of sparing the ordinary brakes during braking of the vehicle. The more the necessary braking work can be performed by the retarder, the less the vehicle's ordinary brakes will need to be used and hence the less wear there will be on their linings.

The retarder is placed at a suitable position in the driveline between the engine and wheels of the vehicle and is therefore drivingly connected to the vehicle's power transmission or its wheels. The braking effect in the retarder is engendered by a hydraulic fluid flow acting on parts which are drivingly connected to the power transmission or the vehicle's wheels.

DE-C2-2 923 406 describes a retarder mounted at the rear end of a transmission and in which friction brakes co-operates with the hydraulic retarder. This reference also shows how the hydraulic pressure to the retarder is controlled dependent upon the retarder speed, which by its connection to the drive shaft of the transmission directly corresponds to the vehicle speed and not to engine revs.

A major problem with hydraulic retarders is that the braking work which is done in the retarder results in heating of the hydraulic oil in the retarder, with a consequent need to remove this heat from the hydraulic oil. This is achieved by the hydraulic oil being cooled by means of coolant contained in the ordinary cooling system of the vehicle's engine. The coolant flow, i.e. the heat removal capacity, of that cooling system depends on the effect of the coolant pump, which depends on the speed at which the pump is run. This speed depends in its turn on the speed of the vehicle's engine.

When the driver wishes to brake the vehicle and depresses the brake pedal, it is natural for him to release the accelerator, resulting in the engine speed decreasing in step with the vehicle speed reduction resulting from the braking, and if the driver then disengages the clutch the engine speed will decrease to idling speed. Such a low engine speed entails a correspondingly low coolant pump speed with consequently low pump effect resulting in minimum coolant flow and minimum heat removal capacity precisely in the situation which requires the greatest possible coolant flow for achieving as great a cooling effect as possible and being able to "cool away" the heat which develops in the retarder when the latter is used for braking. For this reason it is usual, when braking with a retarder, to employ a special driving technique which involves first changing down to a lower gear in order to increase the engine speed and hence also increase coolant flow in the coolant circuit of the cooling system.

To ensure that this will under no circumstances result in local boiling anywhere in the coolant circuit, it is essential to limit the maximum braking effect which the retarder can be allowed to develop. This limitation to prevent boiling entails the maximum braking effect value which the retarder can reach having to be set at a relatively low level with respect to the value represented by the maximum braking effect which the retarder could otherwise provide.

On long runs it is therefore not possible to use the full braking effect of the retarder (particularly not at high engine speeds) without having an unnecessarily inferior or ineffective retarder brake because of having to meet the braking effect limitation requirement in order to reliably eliminate any risk of local boiling in the cooling system circuit. This result does of course directly conflict with an expressed wish to spare the vehicle's ordinary brakes by making the maximum possible use of the retarder for providing the desired braking effect.

### Object of the invention

The object of the invention is to be able as far as possible to eliminate the abovementioned severe limitation on the maximum braking effect which may be utilised from the retarder, and to achieve this without any risk of simultaneous boiling of the coolant in the cooling system. In other words, the aim is to achieve automatic prevention of boiling at the same time as being able to apply a substantially higher maximum limit to the braking effect which may be utilised from the retarder than has previously been possible.

### Summary of the invention

The aforesaid object is achieved according to the invention, on the one hand by a process of the kind indicated in the introduction and distinguished by adoption of the measures indicated in the characterising portion of claim 1, and on the other hand by a control system of the kind indicated in the introduction and exhibiting the features indicated in the characterising portion of claim 5.

The dependent claims 2, 3 and 4 indicate further developments of the process, and claims 6 and 7 indicate advantageous embodiments of the control system.

The idea on which the invention is based may be said to be that the maximum braking effect which may be utilised from the retarder is controlled by means of at least one primary operating parameter, viz. engine speed, possibly also in combination with one or more secondary operating parameters such as, for example, coolant temperature.

### Brief description of the drawing

The invention will now be further explained and clarified with reference to an embodiment depicted in the accompanying drawing.

The single block diagram in the drawing depicts schematically a control system for limitation by engine speed of the maximum braking effect may be utilised from a retarder (a hydrodynamic auxiliary brake) in an engine-driven vehicle.

### Description of the embodiment

The vehicle concerned is only schematically represented in the form of the block 10, which is delineated by a broken line and within which appear the parts of the vehicle which are of primary interest in the present context, viz. the vehicle engine 12, the gearbox 14 adjacent thereto and a hydrodynamic retarder 16 which in this case is fitted adjacent to the gearbox. This retarder constitutes an auxiliary brake for the vehicle, with the task of helping the vehicle's ordinary brakes, such as wheel brakes, to brake the vehicle. The retarder is depicted here as fitted to the gearbox, and the retarder's impeller is drivingly connected to the output shaft of the gearbox via an undepicted gear. The retarder impeller is also permanently drivingly connected to the vehicle's propeller shaft and its rotation speed is proportional to that of the propeller shaft. The stator portion interacting with the impeller is fixed in the retarder housing. The retarder could also inherently be conceived as being placed elsewhere in the driveline between the engine/gearbox and the vehicle's powered wheels 18. Part of this driveline is denoted in the diagram by reference 20.

When the vehicle is braked by means of the retarder 16, the braking effect developed is converted into heating of the hydraulic operating medium of the retarder, usually a suitable type of hydraulic oil. It is therefore necessary to achieve cooling of the hydraulic oil, which in the present case is done by means of a coolant, usually water, which is contained in and flows through the engine's ordinary cooling system, which is represented in the diagram by a radiator 22 connected to the engine 12 and to the retarder 16. The left end of the retarder 16 as seen in the diagram constitutes the retarder's oil cooler 24, in which heat exchange takes place between the retarder's hydraulic oil and the cooling system's coolant, which is then cooled in the usual manner in the radiator 22. The flow of coolant through the cooling system is maintained in a conventional manner by means of an undepicted coolant pump which is driven by the engine 12 and whose speed and cooling effect therefore vary with the engine speed.

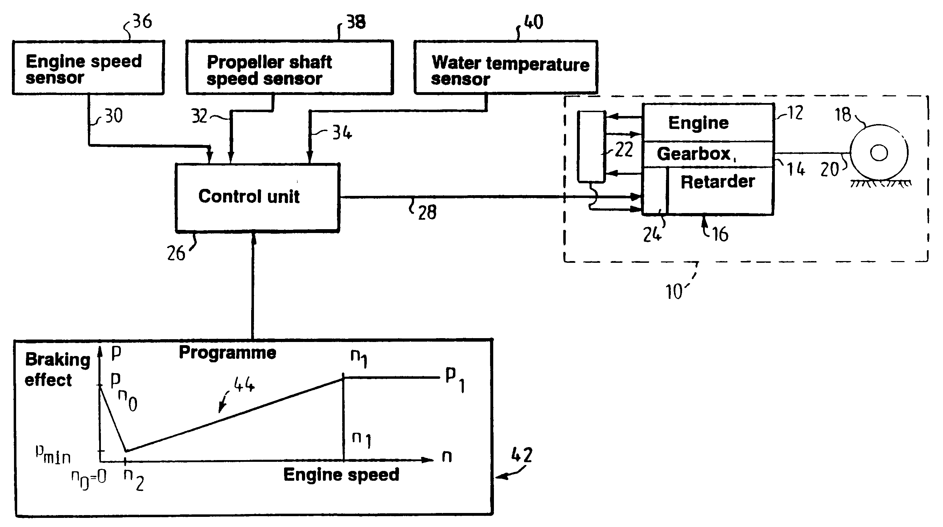

We now go on to consider the electrical control circuit which controls and limits the maximum braking effect which may be utilised from the retarder 16. This control circuit incorporates an electrical control unit 26 which is connected to the retarder 16 via the signal line 28. This control unit 26 is connected by signal lines 30, 32 and 34 to an engine speed sensor 36, a propeller shaft speed sensor 38 and a cooling water temperature sensor 40. The control unit 26 is also provided with or connected to an electrical programme control 42 which on the basis of the engine speed sensed by the engine speed sensor 36 adjusts the output signal from the control unit 26 to the retarder 16 (via the line 28) so that the maximum braking effect which can be derived from the retarder will vary with the engine speed in accordance with the graph 44 depicted in the diagram and stored in the control block 42.

In this embodiment, control of the braking effect of the retarder 16 is exerted indirectly by controlling its braking torque. For the control unit to be able to calculate the braking torque which corresponds to a given braking effect, it also needs information on the retarder speed at the time. As mentioned above, the retarder is permanently drivingly connected to the vehicle's propeller shaft, which makes the retarder speed proportional to the propeller shaft speed, which is therefore used to represent the retarder speed. The control unit is connected via the line 32 to the propeller shaft speed sensor 38 so that the control unit 26 can use signals from the latter for calculating the maximum braking torque which the retarder may be allowed so as to correspond to the maximum braking effect which has previously been calculated for the relevant engine speed according to the graph 44 in the control block 42. Control of the retarder's braking torque is provided in practice by means of a valve arrangement in the retarder which adjusts the oil pressure in the retarder in proportion to the voltage supplied by the control unit 26 via the signal line 28.

As already discussed above in the general portion of the description, the basic principle of the invention is that the engine speed is used as control parameter for determining the maximum braking effect the retarder 16 is allowed to develop. It is thus possible at any engine speed value to apply optimum retarder effect without any risk of coolant in the cooling system reaching boiling point anywhere in the cooling medium circuit. The invention thus ensures automatic prevention of boiling.

Using the engine speed to achieve maximum braking effect limitation according to the invention makes it possible at high engine speeds and correspondingly high cooling medium flows to utilise a greater retarder effect than is possible in practice by previously known techniques whereby the maximum utilisable retarder braking effect is unavoidably limited to a predetermined relatively very low maximum value which is independent of engine speed and is chosen so as to reliably prevent boiling irrespective of engine speed.

Reference will now be made finally to the programme control 42 and more specifically to the graph 44 depicting the maximum utilisable retarder braking effect p as a function of the engine speed n.

Our consideration of the graph or braking effect curve 44 will proceed from its right end in the diagram to its left end corresponding to a notional zero speed of the vehicle engine.

As may be seen, the control system has the characteristic that a constant maximum braking effect p₁ is always available when the engine speed n exceeds a predetermined first break-point speed n₁. This braking effect p₁ corresponds to the maximum which the retarder can provide during normal operating conditions with proper cooling of its hydraulic oil.

Reducing the engine speed n results in cooling capacity being reduced correspondingly by the reduced speed of the coolant pump. At the break-point speed n₁, the maximum available braking effect is controlled so as to decrease in a linear manner with the engine speed n down to a minimum braking effect value pₘᵢₙ at a predetermined second break-point speed n₂. This speed n₂ may itself be set at zero, corresponding to complete engine standstill. In this example, however, the second break-point speed n₂ has been set at a very low speed, e.g. 250 revolutions per minute, which is below the engine's idling speed.

The reason for this is as follows. Should the speed sensor 36 or its connection line 30 cease to function, this would result in an indicated engine speed of zero. This would in its turn mean that the maximum braking effect of the retarder would be reduced to an insignificant or low value even if the engine was actually running at a substantially higher speed. To ensure a certain braking effect in such a situation, the retarder is set to produce a certain theoretical braking effect P_{nO} if the engine speed indicated is zero (n_{O} = O), which corresponds to interruption of operating parameter control by means of engine speed.

To make the braking effect variation between the break-point speed n₂ and the zero speed n_{O} continuous, the retarder's maximum braking effect p is set so as to increase in an linear manner with decreasing speed n between those speeds up to the braking effect limit value p_{nO}.

More precise control of the retarder's braking effect setting can be achieved in modified embodiments of the invention by sensing and applying further operating parameters. One such operating parameter may be the engine water temperature, which is sensed by means of a water temperature sensor 40 connected to the control unit via the line 34. An indicated high water temperature denotes a reduced boiling risk margin and can be applied to shift downwards the whole or parts of the control curve 44. A low water temperature can be applied correspondingly to shift the curve 44 upwards so as to achieve a higher maximum braking effect.

The embodiment described is primarily concerned with the operation of the retarder when using maximum braking effect. The retarder may of course also be used for braking the vehicle with smaller effects in an essentially conventional manner.

## Claims

1. Process for limiting the maximum utilisable braking effect of a hydraulic retarder (16) in an engine-driven vehicle (10) where the retarder (16) is a hydrodynamic brake whose braking engenders heat which is removed by means of coolant of the ordinary cooling system of the vehicle engine, where an electrical control unit (26) is used to control the braking effect of the retarder (16), **characterised** in that the control unit (26) reveives signals, derived from a speed sensor (36), representing the speed of the vehicle engine, and in that the maximum utilisable braking effect from the retarder (16) is controlled as a function of at least the speed of the vehicle engine.

2. Process according to claim 1, **characterised** in that the control unit (26) also receives signals, derived from a temperature sensor (40), representing the cooolant temperature, and in that the maximum utilisable braking effect of the retarder (16) is controlled as a function of vehicle engine speed and the coolant temperature.

3. Process according to claim 1 or 2, **characterised** in that the maximum utilisable braking effect (44) of the retarder (16) is programme-controlled as a function of engine speed (n) so that a constant maximum braking effect (p₁) is always available above a predetermined first break-point speed (n₁), that below that break-point speed the maximum available braking effect decreases in a linear manner with decreasing engine speed down to a minimum braking effect value (Pₘᵢₙ) at a predetermined second break-point speed (n₂) and that below this latter speed the maximum available braking effect increases in a linear manner with decreasing engine speed up to a theoretical braking effect limit value (p_{nO}) at the vehicle engine's theoretical zero speed corresponding to interruption of operating parameter control by means of engine speed.

4. Process according to claim 1, 2 or 3, **characterised** in that the maximum utilisable braking effect of the retarder (16) is controlled indirectly by its braking torque and that signals representing the speed of the retarder (16) are used for calculating the maximum torque which corresponds to a certain maximum braking effect.

5. Control system for limiting the maximum braking effect which may be utilised from a retarder (16) which constitutes a hydrodynamic auxiliary brake for an engine-driven vehicle (10) and is effectively connected to the vehicle's power transmission or wheels, whereby cooling of the hydraulic fluid heated by the retarder's braking is by means of coolant from the ordinary cooling system of the vehicle engine, **characterised** by an electrical control circuit which is used to control the maximum utilisable braking effect of the retarder (16) and includes a control unit (26), which is connected to the retarder, and a speed sensor (36) which is connected to the control unit and is arranged to sense the speed of the vehicle engine (12) and to convey (via 30) an output signal which depends on the engine speed to the control unit (26) which in its turn is arranged, via its output signal transmitted (via 28) to the retarder (16), to control the maximum hydraulic pressure in the retarder as a function of the speed of the vehicle engine.

6. Control system according to claim 5, **characterised** in that the control circuit also includes a speed sensor (38) which is connected to the control unit and is arranged to sense the speed of the vehicle's propeller shaft, and a temperature sensor (40) arranged to detect the coolant temperature, which is connected to the control unit and is arranged to convey (via 34) an output signal which depends on the coolant temperature to the control unit (26), which in its turn is arranged, via its output signal transmitted (via 28) to the retarder (16), to control the maximum hydraulic pressure in the retarder as a function of the speed of the vehicle engine and the coolant temperature.

7. Control system according to claim 5 or 6, **characterised** in that the control unit (26) is provided with a control programme (42) which determines the maximum utilisable braking effect of the retarder (16) as a function of the engine speed sensed by the engine speed sensor (36) so that the maximum braking effect has a constant value (p₁) above a first break-point speed (n₁), that below that speed (n₁) the maximum braking effect decreases in a linear manner with decreasing speed down to a minimum braking effect value (pₘᵢₙ) at a second break-point speed (n₂) and that from the latter speed (n₂) down to zero speed (n_{O}) of the vehicle engine the maximum braking effect increases in a linear manner with decreasing engine speed from the aforesaid minimum braking effect value (pₘᵢₙ) up to a theoretical braking effect limit value (p_{nO}).

## Patentansprüche

1. Verfahren zum Begrenzen der maximalen nutzbaren Bremswirkung eines hydraulischen Retarders (16) in einem motorgetriebenen Fahrzeug (10), bei dem der Retarder (16) eine hydrodynamische Bremse ist, deren Bremsen Wärme erzeugt, die durch Kühlmittel des gewöhnlichen Kühlsystems des Fahrzeugmotors abgeführt wird, wobei ein elektrisches Steuergerät (26) zum Steuern der nutzbaren Bremswirkung des Retarders (16) verwendet wird,
dadurch gekennzeichnet, daß das Steuergerät (26) von einem Drehzahlsensor (36) abgeleitete, die Drehzahl des Fahrzeugmotors darstellende Signale erhält, und daß die maximale nutzbare Bremswirkung des Retarders (16) als eine Funktion wenigstens der Drehzahl des Fahrzeugmotors gesteuert wird.

2. Verfahren nach Anspruch 1,
dadurch gekennzeichnet, daß das Steuergerät (26) auch von einem Temperatursensor (40) abgeleitete Signale erhält, die die Kühlmitteltemperatur darstellen, und daß die maximale nutzbare Bremswirkung des Retarders (16) als eine Funktion der Drehzahl des Fahrzeugmotors und der Kühlmitteltemperatur gesteuert wird.

3. Verfahren nach Anspruch 1 oder 2,
dadurch gekennzeichnet, daß die maximale nutzbare Bremswirkung (44) des Retarders (16) als eine Funktion der Motordrehzahl (n) so programmgesteuert wird, daß über einer vorbestimmten ersten Knickpunktdrehzahl (n₁) eine konstante maximale Bremswirkung (p₁) immer verfügbar ist, daß unter dieser Knickpunktdrehzahl die maximale verfügbare Bremswirkung linear mit abnehmender Motordrehzahl auf einen minimalen Bremswirkungswert (pₘᵢₙ) bei einer vorbestimmten zweiten Knickpunktdrehzahl (n₂) abnimmt, und daß unter dieser letzten Drehzahl die maximale verfügbare Bremswirkung linear mit abnehmender Motordrehzahl auf einen theoretischen Bremswirkungsgrenzwert (p_{nO}) bei der theoretischen Null-Drehzahl des Fahrzeugmotors zunimmt, die einer Unterbrechung des Betreibens der Parametersteuerung durch die Motordrehzahl entspricht.

4. Verfahren nach Anspruch 1, 2 oder 3,
dadurch gekennzeichnet, daß die maximale nutzbare Bremswirkung des Retarders (16) indirekt durch sein Bremsdrehmoment gesteuert wird, und daß die Drehzahl des Retarders (16) darstellende Signale zum Berechnen des maximalen Drehmoments verwendet werden, das einer bestimmten maximalen Bremswirkung entspricht.

5. Steuersystem zum Begrenzen der maximalen nutzbaren Bremswirkung eines Retarders (16), der für ein motorgetriebenes Fahrzeug (10) eine hydrodynamische Hilfsbremse bildet und mit dem Antriebsstrang oder den Rädern des Fahrzeugs wirksam verbunden ist, wobei ein Kühlen des beim Retarderbremsen erwärmten Hydraulikfluids durch Kühlmittel des gewöhnlichen Kühlsystems des Fahrzeugmotors erfolgt,
gekennzeichnet durch eine elektrische Steuerschaltung, die zum Steuern der maximalen nutzbaren Bremswirkung des Retarders (16) verwendet wird und ein Steuergerät (26) aufweist, das an den Retarder angeschlossen ist, und einen Drehzahlsensor (36), der an das Steuergerät angeschlossen ist und zum Sensieren der Drehzahl des Fahrzeugmotors (12) eingerichtet ist und zum Abgeben (über 30) eines von der Motordrehzahl abhängigen Ausgangssignals an das Steuergerät (26), das seinerseits über seine (über 28) an den Retarder (16) übertragenen Ausgangssignale eingerichtet ist, den maximalen Hydraulikdruck im Retarder als eine Funktion der Drehzahl des Fahrzeugmotors zu steuern.

6. Steuersystem nach Anspruch 5,
dadurch gekennzeichnet, daß die Steuerschaltung auch einen Drehzahlsensor (38) aufweist, der an das Steuergerät angeschlossen und eingerichtet ist, die Drehzahl der Antriebswelle des Fahrzeugs zu sensieren, und einen Temperatursensor (40), der eingerichtet ist, die Kühlmitteltemperatur zu sensieren, und der an das Steuergerät angeschlossen und eingerichtet ist, (über 34) ein von der Kühlmitteltemperatur abhängiges Ausgangssignal an das Steuergerät (26) abzugeben, das seinerseits eingerichtet ist, über sein (über 28) an den Retarder (16) übertragenes Ausgangssignal den maximalen Hydraulikdruck im Retarder als eine Funktion der Drehzahl des Fahrzeugmotors und der Kühlmitteltemperatur zu steuern.

7. Steuersystem nach Anspruch 5 oder 6,
dadurch gekennzeichnet, daß das Steuergerät (26) ein Steuerprogramm (42) aufweist, das die maximale nutzbare Bremswirkung des Retarders (16) als eine Funktion der vom Motordrehzahlsensor (36) sensierten Motordrehzahl so festlegt, daß die maximale Bremswirkung über einer ersten Knickpunktdrehzahl (n₁) einen konstanten Wert (p₁) hat, daß unter dieser Drehzahl (n₁) die maximale Bremswirkung linear mit abnehmender Drehzahl auf einen minimalen Bremswirkungswert (pₘᵢₙ) bei einer zweiten Knickpunktdrehzahl (n₂) abnimmt, und daß von der letzten Drehzahl (n₂) hinunter auf die Null-Drehzahl (n₀) des Fahrzeugmotors die maximale Bremswirkung vom oben genannten minimalen Bremswirkungswert (pₘᵢₙ) linear mit abnehmender Motordrehzahl auf einen theoretischen Bremswirkungsgrenzwert (pₙ₀) zunimmt.

## Revendications

1. Procédé pour limiter l'effet de freinage maximun utilisable d'un ralentisseur hydraulique (16) dans un véhicule (10) entraîné par un moteur, dans lequel le ralentisseur (16) est un frein hydrodynamique dont le freinage dégage de la chaleur qui est éliminée au moyen d'un fluide de refroidissement du système de refroidissement usuel du moteur du véhicule, et dans lequel une unité de commande électrique (26) est utilisée pour commander l'effet de freinage utilisable du ralentisseur (16), caractérisé en ce que l'unité de commande (26) reçoit des signaux, qui proviennent d'un capteur de vitesse (36), représentant la vitesse du moteur du véhicule, et en ce que l'effet de freinage maximum utilisable du ralentisseur (16) est commandé en fonction au moins de la vitesse du moteur du véhicule.

2. Procédé selon la revendication 1, caractérisé en ce que l'unité de commande (26) reçoit également des signaux, provenant d'un capteur de température (40) et représentant la température du fluide de refroidissement, et en ce que l'effet de freinage maximum utilisable du ralentisseur (16) est commandé en fonction de la vitesse du moteur du véhicule et de la température du fluide de refroidissement.

3. Procédé selon la revendication 1 ou 2, caractérisé en ce que l'effet de freinage maximum utilisable (44) du ralentisseur (16) est commandé au moyen d'un programme en fonction de la vitesse (n) du moteur de sorte qu'un effet de freinage maximum constant (p₁) est toujours disponible au-dessus d'une première vitesse critique prédéterminée (n₁), et qu'au-dessous de la vitesse critique, l'effet de freinage maximum disponible diminue d'une manière linéaire lorsque la vitesse du moteur diminue jusqu'à une valeur d'effet de freinage minimum (pₘᵢₙ) pour une seconde vitesse critique prédéterminée (n₂), et qu'au-dessous de cette dernière vitesse, l'effet de freinage maximum disponible augmente d'une manière linéaire lorsque la vitesse du moteur augmente jusqu'à une valeur limite d'effet de freinage théorique (pₙ₀) à la vitesse zéro théorique du moteur du véhicule, qui correspond à une interruption de la commande de paramètres de fonctionnement au moyen de la vitesse du moteur.

4. Procédé selon la revendication 1, 2 ou 3, caractérisé en ce que l'effet de freinage maximum utilisable du ralentisseur (16) est commandé d'une manière indirecte par son couple de freinage, et que des signaux représentant la vitesse du ralentisseur (16) sont utilisés pour calculer le couple maximum qui correspond à un certain effet de freinage maximum.

5. Système de commande pour limiter l'effet de freinage maximum qui peut être utilisé à partir d'un ralentisseur (16) qui constitue un frein auxiliaire hydrodynamique pour un véhicule (10) entraîné par un moteur et est effectivement raccordé à la transmission de puissance du véhicule ou aux roues du véhicule, ce qui a pour effet qu'un refroidissement du fluide hydraulique chauffé sous l'effet du freinage du ralentisseur s'effectue au moyen du fluide de refroidissement provenant du système usuel de refroidissement du moteur du véhicule, caractérisé par un circuit de commande électrique, qui est utilisé pour commander l'effet de freinage maximum utilisable du ralentisseur (16) et inclut une unité de commande (26), qui est raccordée au ralentisseur et un capteur de vitesse (36), qui est raccordé à l'unité de commande et est agencé de manière à détecter la vitesse du moteur (12) du véhicule et à transmettre (par l'intermédiaire de 30) un signal de sorite qui dépend de la vitesse du moteur, à l'unité de commande (26) qui à son tour est agencée de manière à commander, au moyen du signal de sortie transmis (par l'intermédiaire de 28) au ralentisseur (16), la pression hydraulique maximale dans le ralentisseur en fonction de la vitesse du moteur du véhicule.

6. Système de commande selon la revendication 5, caractérisé en ce que le circuit de commande comprend également un capteur de vitesse (38) qui est connecté à l'unité de commande et est agencé de manière à détecter la vitesse de l'arbre de propultion du véhicule, et un capteur de température (40) agencé pour détecter la température du fluide de refroidissement et qui est connecté à l'unité de commande et est agencé de manière à transmettre (par l'intermédiaire de 34) un signal de sortie qui dépend de la température du fluide de refroidissement, à l'unité de commande (26), qui à son tour est agencée de manière à commander, par l'intermédiaire de son signal de sortie transmis (parl'intermédiaire de 28) au ralentisseur (16), la pression hydraulique maximale dans le ralentisseur, en fonction de la vitesse du moteur du véhicule ou de la température du fluide de refroidissement.

7. Système de commande selon la revendication 5 ou 6, caractérisé en ce que l'unité de commande (26) est pourvue d'un programme de commande (42), qui détermine l'effet de freinage maximum utilisable du ralentisseur (16) en fonction de la vitesse du moteur détectée par le capteur (36) de la vitesse du moteur de sorte que l'effet de freinage maximum possède une valeur constante (p₁) au-dessus d'une première vitesse critique (n₁), qu'au-dessous de cette vitesse (n₁) l'effet de freinage maximum diminue d'une manière linéaire lorsque la vitesse diminue jusqu'à une valeur d'effet de freinage minimum (pₘᵢₙ) pour une seconde vitesse critique (n₂) et qu'à partir de cette dernière vitesse (n₂) et jusqu'à la vitesse zéro (n₀) du moteur du véhicule, l'effet de freinage maximum augmente d'une manière linéaire lorsque la vitesse du moteur diminue depuis la valeur d'effet de freinage minimum mentionnée précédemment (pₘᵢₙ) jusqu'à une valeur limite de freinage théorique (pₙ₀).
